# FASCICULE DE BREVET EUROPEEN

(11) **EP 0 984 157 B1**
(45) Date de publication et mention de la délivrance du brevet: **23.07.2003**
(21) Numéro de dépôt: 99402157.4
(22) Date de dépôt: 31.08.1999
(51) Int. Cl.: F02M 37/00

(54) **Dispositif d'alimentation en gazole pour moteur diesel, et filtre pour un tel dispositif**
Brennstoffzufuhrvorrichtung für Dieselmotor und Filter dafür
Fuel supply device for diesel engine and filter therefor

(30) Priorité: 01.09.1998 FR 9810905
(43) Date de publication de la demande: 08.03.2000
(73) Titulaire: FILTRAUTO, 78180 Montigny le Bretonneux (FR)
(72) Inventeur: Fremont, Laurent, 28410 Bu (FR); Lambert, Christophe, 92370 Chaville (FR)
(74) Mandataire: Burbaud, Eric

(56) Documents cités:
- EP-A- 0 145 986
- EP-A- 0 819 458
- DE-A- 3 825 470
- DE-C- 3 717 342
- DE-C- 3 923 369
- FR-A- 2 386 692
- FR-A- 2 490 733
- GB-A- 2 018 890
- GB-A- 2 140 319
- US-A- 4 683 055

## Description

La présente invention est relative aux dispositifs d'alimentation en gazole pour moteurs diesel, et aux filtres pour de tels dispositifs.

Plus particulièrement, l'invention concerne un dispositif d'alimentation en gazole pour moteur diesel, comportant :
- un réservoir de gazole,
- un dispositif d'injection de gazole,
- un circuit d'alimentation qui relie le réservoir au dispositif d'injection, ce circuit d'alimentation comprenant d'une part, une pompe qui alimente le dispositif d'injection et d'autre part, un élément filtrant disposé en amont de la pompe,
- et un circuit de retour adapté pour recevoir du gazole en excès en aval de la pompe, ce circuit de retour comprenant une vanne thermostatique à trois voies ayant une voie d'entrée et des première et deuxième voies de sortie, la voie d'entrée étant raccordée pour recevoir ledit gazole en excès en aval de la pompe, la première voie de sortie étant reliée au réservoir, et la deuxième voie de sortie communiquant avec une boucle de recirculation reliée au circuit d'alimentation en amont de l'élément filtrant, la vanne thermostatique étant adaptée pour orienter majoritairement le gazole en excès vers la première voie de sortie lorsqu'une température de gazole est supérieure à une température prédéterminée, et pour orienter majoritairement le gazole en excès vers la deuxième voie de sortie lorsque ladite température de gazole est inférieure à ladite température prédéterminée, la boucle de recirculation étant parcourue uniquement par du gazole en excès provenant de la deuxième voie de sortie de la vanne thermostatique.

Le document EP-A-0 819 458 décrit un exemple d'un tel dispositif d'alimentation en gazole, qui permet de réchauffer rapidement et efficacement le gazole au démarrage du moteur par temps froid, lorsque la pompe d'injection de gazole produit un échauffement important du gazole.

Toutefois, les pompes d'injection de gazole utilisées actuellement produisent dans certains cas un échauffement du gazole insuffisant pour garantir que l'élément filtrant ne soit pas colmaté par des particules de paraffine en suspension dans le gazole, au démarrage du moteur par temps froid.

La présente invention a notamment pour but de pallier cet inconvénient.

A cet effet, selon l'invention, un dispositif d'alimentation en gazole du genre en question est essentiellement caractérisé en ce que la boucle de recirculation comporte un dispositif électrique de chauffage de gazole.

Ainsi, le dispositif électrique de chauffage permet de pallier les insuffisances de l'échauffement du gazole par la pompe, notamment par temps particulièrement froid.

De plus, du fait qu'il est disposé sur la boucle de recirculation, ce dispositif électrique n'est parcouru par le gazole qu'au démarrage du moteur, c'est-à-dire pendant une très faible fraction du temps de fonctionnement du moteur : les pertes de charge qui sont générées dans le circuit de gazole par ce dispositif de chauffage ont donc peu d'importance pour le fonctionnement du dispositif d'alimentation.

Au contraire, dans les dispositifs d'alimentation en gazole à réchauffeur électrique de l'art antérieur où le gazole était chauffé exclusivement par ledit réchauffeur électrique au démarrage du moteur, le dispositif électrique de chauffage était disposé dans le circuit d'alimentation entre le réservoir et l'élément filtrant, en générant ainsi des pertes de charges permanentes dans l'écoulement de gazole, ce qui diminuait l'efficacité de ces dispositifs d'alimentation en gazole.

Dans des modes de réalisation préférés du dispositif d'alimentation en gazole selon l'invention, on peut éventuellement avoir recours en outre à l'une et/ou à l'autre des dispositions suivantes :
- l'élément filtrant est contenu dans une cuve délimitée par un boîtier de filtre, lequel boîtier comprend également la vanne thermostatique et la boucle de recirculation avec son dispositif électrique de chauffage ;
- le boîtier de filtre comporte en outre un premier raccord d'entrée qui est relié au réservoir en amont de l'élément filtrant, un premier raccord de sortie qui est relié à la pompe en aval de l'élément filtrant, un deuxième raccord d'entrée qui constitue la voie d'entrée de la vanne thermostatique, et un deuxième raccord de sortie qui constitue la première voie de sortie de la vanne thermostatique.

Par ailleurs, l'invention a également pour objet un filtre à gazole pour un dispositif d'alimentation tel que défini ci-dessus, comportant un boîtier de filtre qui délimite une cuve contenant un élément filtrant, ce boîtier de filtre comprenant également :
- un premier raccord d'entrée qui communique avec la cuve en amont de l'élément filtrant,
- un premier raccord de sortie qui communique avec la cuve en aval de l'élément filtrant,
- une vanne thermostatique à trois voies ayant une voie d'entrée et des première et deuxième voies de sortie, la voie d'entrée étant constituée par un deuxième raccord d'entrée, la première voie de sortie étant constituée par un deuxième raccord de sortie, la vanne thermostatique étant adaptée pour orienter majoritairement un flux de gazole depuis la voie d'entrée vers la première voie de sortie lorsqu'une température de gazole est supérieure à une température prédéterminée, et pour orienter majoritairement ledit flux de gazole vers la deuxième voie de sortie lorsque ladite température de gazole est inférieure à ladite température prédéterminée,
- et une boucle de recirculation, qui fait communiquer la deuxième voie de sortie de la vanne thermostatique avec la cuve en amont de l'élément filtrant, cette boucle de recirculation comportant un dispositif électrique de chauffage de gazole.

Dans des modes de réalisation préférés du filtre selon l'invention, on peut éventuellement avoir recours en outre à l'une et/ou à l'autre des dispositions suivantes :
- la boucle de recirculation est délimitée entre, d'une part, une paroi d'extrémité appartenant au boîtier de filtre, et d'autre part, une première plaque rapportée disposée dans la cuve, ladite paroi d'extrémité et ladite première plaque rapportée étant traversées avec étanchéité par deux conduits qui communiquent respectivement avec le premier raccord d'entrée et le premier raccord de sortie ;
- la boucle de recirculation comprend trois étages superposés séparés les uns des autres par des deuxième et troisième plaques rapportées métalliques qui sont disposées entre ladite paroi d'extrémité du boîtier et la première plaque rapportée et qui sont en contact thermique avec des éléments chauffants appartenant au dispositif électrique de chauffage, la boucle de recirculation étant conformée de façon que le gazole qui parcourt cette boucle de recirculation chemine parallèlement aux deuxième et troisième plaques rapportées à chaque étage de ladite boucle de recirculation ;
- les éléments chauffants sont serrés entre les deuxième et troisième plaques rapportées, lesquelles sont sollicitées élastiquement l'une vers l'autre ;
- les éléments chauffants sont alimentés électriquement par l'intermédiaire des deuxième et troisième plaques rapportées.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue schématique d'un dispositif d'alimentation pour moteur diesel selon une forme de réalisation de l'invention,
- la figure 2 est une vue partielle en perspective de la partie supérieure du boîtier du filtre appartenant au dispositif d'alimentation de la figure 1,
- la figure 3 est une vue en coupe verticale selon le plan III-III de la figure 2,
- la figure 4 est une vue de dessous en perspective de l'intérieur de la cuve du filtre de la figure 3, l'élément filtrant contenu dans cette cuve étant enlevé,
- la figure 5 est une vue similaire à la figure 4, dans laquelle les trois plaques rapportées formant la boucle de recirculation en partie supérieure de la cuve ont en outre été enlevées,
- la figure 6 est une vue similaire à la figure 5, dans laquelle seules les deux plaques rapportées inférieures formant la boucle de recirculation ont été enlevées,
- et la figure 7 est également une vue similaire à la figure 5, dans laquelle seule la plaque rapportée inférieure formant la boucle de recirculation a été enlevée.

Sur les différentes figures, les mêmes références désignent des éléments identiques ou similaires.

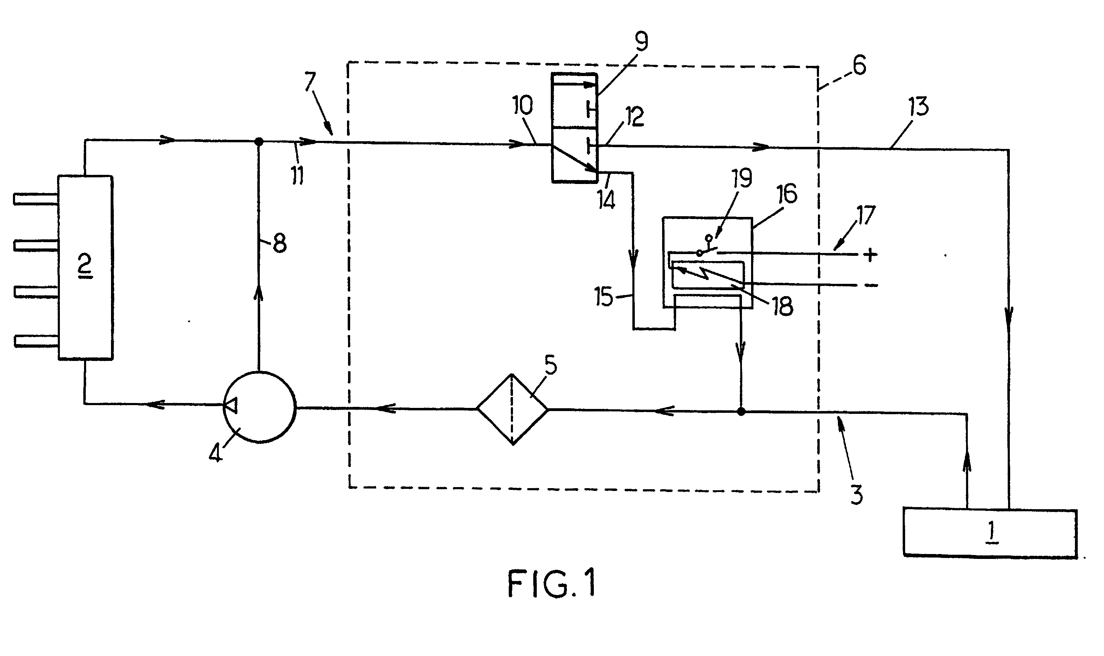

La figure 1 représente un dispositif d'alimentation en gazole pour moteur diesel de véhicule automobile, comportant :
- un réservoir de gazole 1,
- un dispositif d'injection de gazole 2, constitué en particulier par une rampe d'injecteurs, par exemple une rampe pour injection directe,
- un circuit d'alimentation 3 qui relie le réservoir 1 à la rampe d'injecteurs 2, ce circuit d'alimentation comprenant d'une part, une pompe d'injection 4 qui alimente la rampe d'injecteurs 2 (par exemple une pompe haute pression pour injection directe de type "common rail"), et d'autre part, un élément filtrant 5 disposé en amont de la pompe d'injection 4 et intégré dans un filtre à gazole 6, cet élément filtrant pouvant notamment être réalisé en papier filtre plissé,
- et un circuit de retour de gazole 7 qui recueille du gazole en excès provenant soit de la rampe d'injecteurs 2, soit d'un by-pass 8 recueillant du gazole directement en sortie de la pompe d'injection 4 sans passer dans la rampe d'injecteurs 2.

Le circuit de retour 7 comprend une vanne thermostatique 9 à trois voies qui est de préférence intégrée dans le filtre à gazole 6 et qui comprend :
- une voie d'entrée 10 qui communique avec un conduit 11 recevant le gazole en excès de la rampe d'injecteur 2 et du by-pass 8,
- une première voie de sortie 12 qui communique avec une canalisation 13 débouchant dans le réservoir 1,
- et une deuxième voie de sortie 14 qui communique avec une boucle de recirculation 15 reliée au circuit d'alimentation 3 entre le réservoir 1 et l'élément filtrant 5, cette boucle de recirculation 15 étant de préférence intégrée dans le filtre à gazole 6.

La vanne thermostatique 9 est adaptée pour mesurer une température de gazole, notamment la température du gazole arrivant par sa voie d'entrée 10, de façon à orienter majoritairement ce gazole :
- vers la première voie de sortie 12 et le réservoir 1 lorsque ladite température de gazole est supérieure à une valeur prédéterminée, par exemple environ 25°C,
- et vers la deuxième voie de sortie 14 et la boucle de recirculation 15 lorsque ladite température de gazole est inférieure à la valeur prédéterminée.

De telles vannes thermostatiques à trois voies sont bien connues dans l'état de la technique.

En particulier, un exemple de vanne thermostatique utilisable dans la présente invention est décrit dans le document EP-A-0 819 458 susmentionné, où la vanne est commandée par la dilatation thermique d'une masse de cire qui permet :
- de diriger tout le gazole en excès vers la première voie de sortie lorsque la température de ce gazole est supérieure à 30°C,
- de diriger tout le gazole en excès vers la deuxième voie de sortie lorsque la température de ce gazole est inférieure à 20°C,
- et de partager le courant de gazole entre les première et deuxième voies de sortie lorsque sa température est comprise entre 20 et 30°C.

Par ailleurs, la boucle de recirculation 15 comporte un dispositif électrique de chauffage 16, qui est lui-même intégré dans le filtre à gazole 6 et qui est alimenté électriquement à partir d'un connecteur 17 monté sur le filtre 6 et relié au circuit électrique du véhicule.

Ce dispositif électrique de chauffage comprend un réchauffeur électrique 18 proprement dit, connu en soi, qui est commandé par un interrupteur 19.

De préférence, l'interrupteur 19 est commandé en fonction d'une température de gazole, et notamment en fonction de la température du gazole circulant dans la boucle de recirculation 15, pour se fermer uniquement lorsque ladite température de gazole est inférieure à une valeur prédéterminée, par exemple environ 20°C.

L'interrupteur 19 à commande thermique, ou "thermocontact", est bien connu dans l'état de la technique et peut par exemple être un dispositif classique à bilame, ou autre.

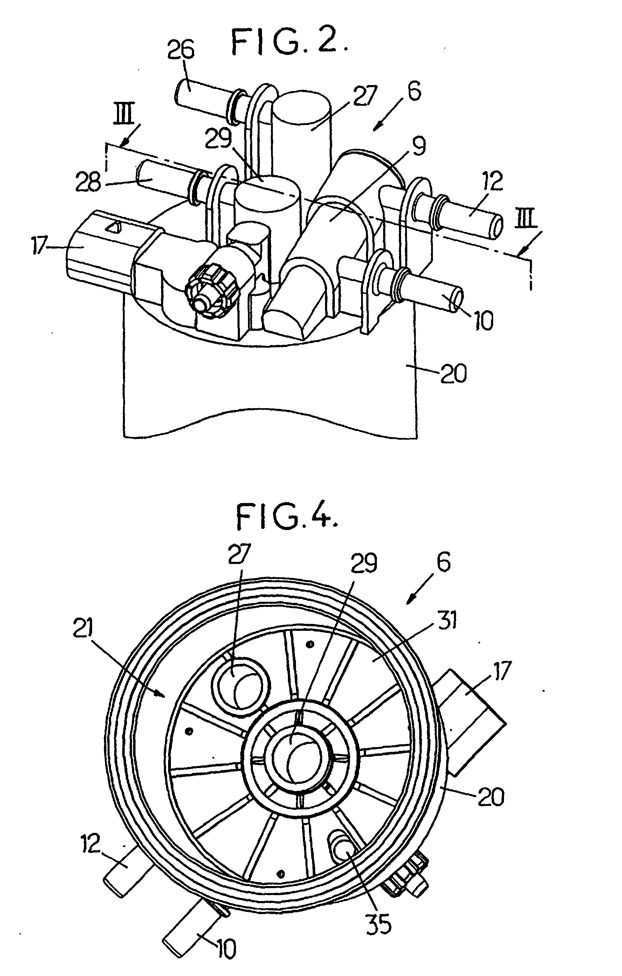

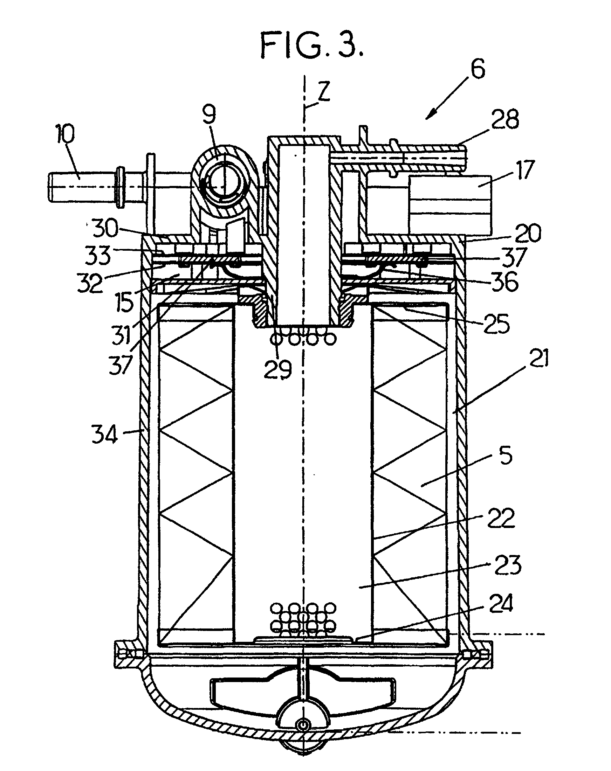

Les figures 2 à 7 montrent un mode de réalisation préféré du filtre 6, comprenant un boîtier rigide 20, réalisé par exemple en matière plastique, qui délimite intérieurement une cuve 21 pouvant présenter par exemple une forme cylindrique de revolution d'axe vertical Z (voir figure 3).

Cette cuve 21 contient l'élément filtrant 5 susmentionné en papier plissé, qui dans le cas présent a lui-même une forme cylindrique centrée sur l'axe Z.

Cet élément filtrant 5 est classiquement disposé autour d'un tube perforé 22 qui délimite un espace intérieur creux 23, isolé de la cuve 21 par des flasques d'extrémité 24,25.

L'élément filtrant 5 est ainsi interposé entre :
- un premier raccord d'entrée 26 qui est connecté au réservoir de gazole 1 et qui communique par l'intermédiaire d'un puits vertical 27 avec la cuve 21, à l'extérieur de l'élément filtrant 5 (voir figures 2 à 4),
- et un premier raccord de sortie 28 qui est raccordé à l'entrée de la pompe d'injection 4 et qui communique avec l'espace intérieur 23 de l'élément filtrant par l'intermédiaire d'un puits vertical 29.

Par ailleurs, comme on peut le voir sur la figure 2, la partie supérieure du boîtier 20 comporte en outre la vanne thermostatique 9, ainsi qu'un deuxième raccord d'entrée formant la voie d'entrée 10 de cette vanne thermostatique et un deuxième raccord de sortie formant la première voie de sortie 12 de ladite vanne thermostatique.

Enfin, comme on peut le voir sur la figure 3, la partie supérieure du boîtier 20 comporte également la boucle de recirculation 15, qui comporte trois étages superposés délimités entre la paroi horizontale supérieure 30 du boîtier et trois plaques horizontales rapportées dans la cuve 21 sous cette paroi 30, savoir :
- une plaque inférieure 31, réalisée par exemple en matière plastique,
- et deux plaques intermédiaires 32,33 réalisées de préférence en métal.

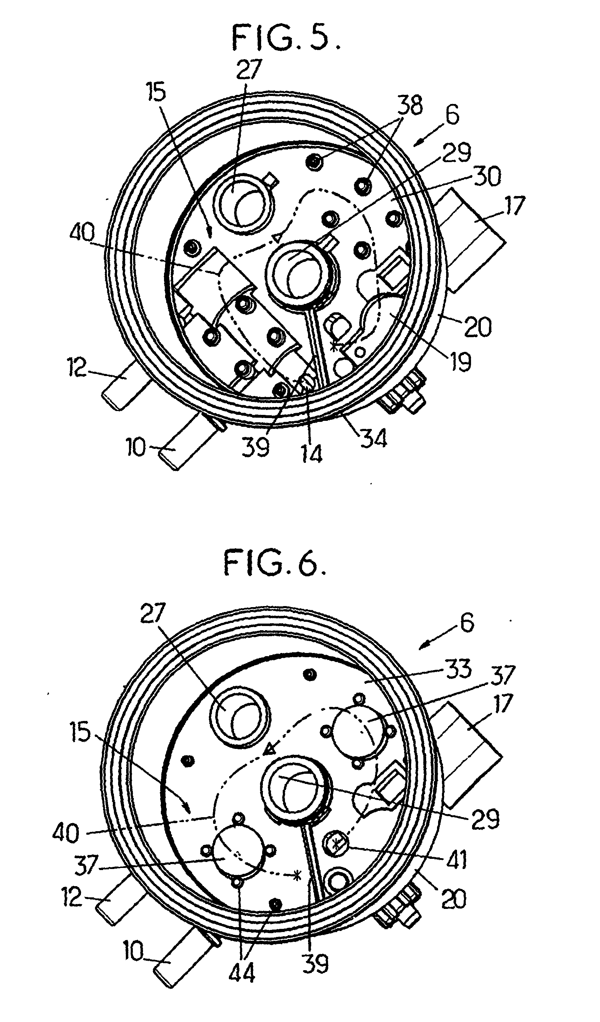

Les plaques rapportées 31-33 sont en contact périphérique étanche avec la paroi latérale 34 du boîtier 20, et lesdites plaques 31-33 sont par ailleurs traversées avec étanchéité par les puits verticaux 27,29 susmentionnés, la plaque inférieure 31 étant percée d'un orifice 35 qui fait communiquer la boucle de recirculation 15 avec la cuve 21 à l'extérieur de l'élément filtrant 5 (voir figure 4).

De plus, les plaques métalliques 32,33 sont sollicitées vers le haut contre la paroi supérieure 30 du boîtier par un ressort à lames 36 (voir figure 3), avec interposition d'éléments résistifs chauffants 37 entre les deux plaques 32,33, ces éléments résistifs 37 appartenant au réchauffeur électrique 18 et étant de préférence de type "PTC", c'est-à-dire à coefficient de température positif.

Les éléments chauffants 37 sont ainsi en contact thermique avec les plaques métalliques 32,33. Avantageusement, ces plaques 32,33 sont en outre reliées au connecteur électrique 17 par des électrodes ou des fils (non représentés), de façon à assurer l'alimentation électrique des éléments chauffants 37.

Comme représenté sur la figure 5, la paroi supérieure 30 du boîtier est percée d'un orifice qui forme la deuxième voie de sortie 14 de la vanne thermostatique 9, et la face inférieure de cette paroi 30 porte en outre l'interrupteur à commande thermique 19 susmentionné.

De plus, la face inférieure de la paroi 30 comporte des plots 38 faisant saillie vers le bas, et une cloison radiale 39 qui s'étend entre le puits vertical 29 et la paroi latérale 34 du boîtier 20, au voisinage de la deuxième voie de sortie 14 de la vanne thermostatique.

Ainsi, lorsque la vanne thermostatique 9 envoie un flux de gazole à sa deuxième voie de sortie 14, ce gazole suit sensiblement le chemin 40 représenté en traits mixtes sur la figure 5, en faisant le tour du puits vertical 29 depuis la deuxième voie de sortie 14 jusqu'à un orifice 41 percé dans la plaque métallique 33 (figure 6), près de la face de la cloison 39 qui est orientée à l'opposé de la deuxième voie de sortie 14 de la vanne thermostatique.

Cette plaque métallique 33 est fendue radialement, de façon à s'emboîter sur la cloison 39, et ladite plaque 33 s'appuie sur les plots 38 susmentionnés, en étant ainsi maintenue écartée de la paroi 30 du boîtier.

La paroi 33 forme elle-même des plots 44 orientés vers le bas, et elle est en contact avec les éléments chauffants 37 susmentionnés.

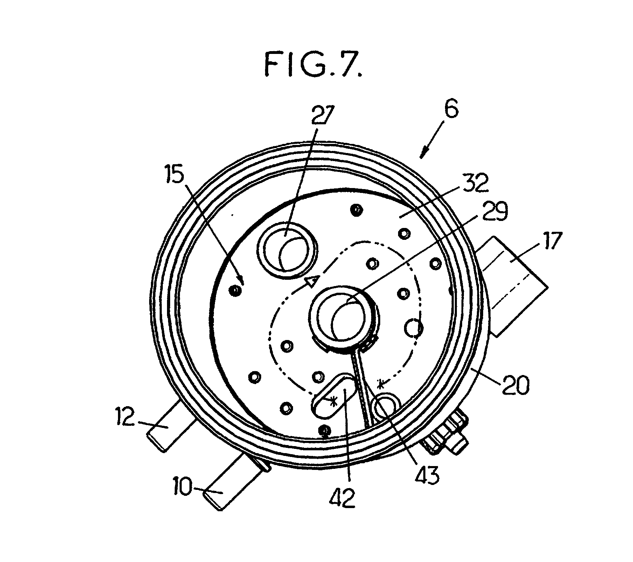

Lorsque la boucle de recirculation 15 est parcourue dans un courant de gazole, ce gazole poursuit donc son chemin 40 en faisant le tour du puits 29 entre les plaques 32 et 33 de façon à éviter la cloison 39, puis en traversant un orifice 42 ménagé dans la plaque métallique 32 (figure 7), près de la face de la cloison 39 qui est orientée à l'opposé de l'orifice 41 susmentionné.

La plaque métallique 32 est maintenue écartée de la plaque 31 par le ressort à lames 36 susmentionné, qui sollicite cette plaque 32 contre les éléments chauffants 37 et les plots 44 de la plaque 33.

La plaque 31 peut avantageusement comporter une cloison radiale 43 représentée en coupe sur la figure 7, qui est disposée entre l'orifice 42 susmentionné et l'orifice 35 de la plaque 31 de façon que le courant 40 de gazole fasse le tour du puits 29.

Ainsi, le gazole qui passe dans la boucle de recirculation 15 suit un cheminement relativement long en parcourant les trois étages de ladite boucle de recirculation 15 parallèlement aux plaques 32,33, ce qui permet de le réchauffer efficacement au contact des éléments chauffants 37 et des plaques métalliques 32,33.

## Revendications

1. Dispositif d'alimentation en gazole pour moteur diesel, comportant :
- un réservoir de gazole (1),
- un dispositif d'injection de gazole (2),
- un circuit d'alimentation (3) qui relie le réservoir (1) au dispositif d'injection (2), ce circuit d'alimentation comprenant d'une part, une pompe (4) qui alimente le dispositif d'injection et d'autre part, un élément filtrant (5) disposé en amont de la pompe,
- et un circuit de retour (7) adapté pour recevoir du gazole en excès en aval de la pompe (4), ce circuit de retour comprenant une vanne thermostatique (9) à trois voies ayant une voie d'entrée (10) et des première et deuxième voies de sortie (12, 14), la voie d'entrée (10) étant raccordée pour recevoir ledit gazole en excès en aval de la pompe, la première voie de sortie (12) étant reliée au réservoir (1), et la deuxième voie de sortie (14) communiquant avec une boucle de recirculation (15) reliée au circuit d'alimentation (3) en amont de l'élément filtrant (5), la vanne thermostatique (9) étant adaptée pour orienter majoritairement le gazole en excès vers la première voie de sortie (12) lorsqu'une température de gazole est supérieure à une température prédéterminée, et pour orienter majoritairement le gazole en excès vers la deuxième voie de sortie (14) lorsque ladite température de gazole est inférieure à ladite température prédéterminée, la boucle de recirculation (15) étant parcourue uniquement par du gazole en excès provenant de la deuxième voie de sortie (14) de la vanne thermostatique (9),
**caractérisé en ce que** la boucle de recirculation (15) comporte un dispositif électrique de chauffage de gazole (16).

2. Dispositif selon la revendication 1, dans lequel l'élément filtrant (5) est contenu dans une cuve (21) délimitée par un boîtier de filtre (20), lequel boîtier comprend également la vanne thermostatique (9) et la boucle de recirculation (15) avec son dispositif électrique de chauffage (16).

3. Dispositif selon la revendication 2, dans lequel le boîtier de filtre (20) comporte en outre un premier raccord d'entrée (26) qui est relié au réservoir (3) en amont de l'élément filtrant (5), un premier raccord de sortie (28) qui est relié à la pompe (4) en aval de l'élément filtrant, un deuxième raccord d'entrée (10) qui constitue la voie d'entrée de la vanne thermostatique, et un deuxième raccord de sortie (12) qui constitue la première voie de sortie de la vanne thermostatique.

4. Filtre à gazole pour un dispositif d'alimentation selon la revendication 2, comportant un boîtier de filtre (20) qui délimite une cuve (21) contenant un élément filtrant (5), ce boîtier de filtre comprenant également :
- un premier raccord d'entrée (26) qui communique avec la cuve (21) en amont de l'élément filtrant,
- un premier raccord de sortie (28) qui communique avec la cuve (21) en aval de l'élément filtrant,
- une vanne thermostatique (9) à trois voies ayant une voie d'entrée (10) et des première et deuxième voies de sortie (12, 14), la voie d'entrée (10) étant constituée par un deuxième raccord d'entrée, la première voie de sortie (12) étant constituée par un deuxième raccord de sortie, la vanne thermostatique (9) étant adaptée pour orienter majoritairement un flux de gazole depuis la voie d'entrée (10) vers la première voie de sortie (12) lorsqu'une température de gazole est supérieure à une température prédéterminée, et pour orienter majoritairement ledit flux de gazole vers la deuxième voie de sortie (14) lorsque ladite température de gazole est inférieure à ladite température prédéterminée,
- et une boucle de recirculation (15), qui fait communiquer la deuxième voie de sortie (14) de la vanne thermostatique avec la cuve (21) en amont de l'élément filtrant (5), cette boucle de recirculation comportant un dispositif électrique de chauffage de gazole (16).

5. Filtre selon la revendication 4, dans lequel la boucle de recirculation (15) est délimitée entre, d'une part, une paroi d'extrémité (30) appartenant au boîtier de filtre, et d'autre part, une première plaque rapportée (31) disposée dans la cuve (21), ladite paroi d'extrémité et ladite première plaque rapportée étant traversées avec étanchéité par deux conduits (27, 29) qui communiquent respectivement avec le premier raccord d'entrée (26) et le premier raccord de sortie (28).

6. Filtre selon la revendication 5, dans lequel la boucle de recirculation (15) comprend trois étages superposés séparés les uns des autres par des deuxième et troisième plaques rapportées (32, 33) métalliques qui sont disposées entre ladite paroi d'extrémité (30) du boîtier et la première plaque rapportée (31) et qui sont en contact thermique avec des éléments chauffants (37) appartenant au dispositif électrique de chauffage (16), la boucle de recirculation (15) étant conformée de façon que le gazole qui parcourt cette boucle de recirculation chemine parallèlement aux deuxième et troisième plaques rapportées (32, 33) à chaque étage de ladite boucle de recirculation.

7. Filtre selon la revendication 6, dans lequel les éléments chauffants (37) sont serrés entre les deuxième et troisième plaques rapportées (32, 33), lesquelles sont sollicitées élastiquement l'une vers l'autre.

8. Filtre selon la revendication 7, dans lequel les éléments chauffants (37) sont alimentés électriquement par l'intermédiaire des deuxième et troisième plaques rapportées.

## Patentansprüche

1. Vorrichtung zur Gasölzuführung für Dieselmotoren, die aufweist:
- einen Gasölbehälter (1),
- eine Gasöleinspritzvorrichtung (2),
- einen Speisekreis (3), der den Behälter (1) mit der Einspritzvorrichtung (2) verbindet, wobei der Speisekreis einerseits eine Pumpe (4) aufweist, die die Einspritzvorrichtung speist, und andererseits ein Filterelement (5) aufweist, das sich vor der Pumpe befindet,
und einen Rückführkreis (7), der dazu geeignet, das überschüssige Gasöl stromabwärts von der Pumpe (4) aufzunehmen, wobei dieser Rückführkreis ein Thermostatventil (9) mit drei Wegen aufweist, das einen Einlassweg (10) und einen ersten und zweiten Auslassweg (12, 14) hat, wobei der Einlassweg (10) verbunden ist, um das überschüssige Gasöl stromabwärts von der Pumpe aufzunehmen, wobei der erste Auslassweg (12) mit dem Behälter (1) verbunden ist und der zweite Auslassweg (14) mit einen Rezirkulationskreis (15) in Verbindung steht, der mit dem Speisekreis (3) vor dem Filterelement (5) verbunden ist, wobei das Thermostatventil (9) dazu geeignet ist, das überschüssige Gasöl mehrheitlich zum ersten Auslassweg (12) auszurichten, wenn die Gasöltemperatur höher als eine vorbestimmte Temperatur ist, und das überschüssige Gasöl mehrheitlich zum zweiten Auslassweg (14) auszurichten, wenn die Gasöltemperatur niedriger als die vorbestimmte Temperatur ist, wobei der Rezirkulationskreis (15) nur durch überschüssiges Gasöl, das vom zweiten Auslassweg (14) des Thermostatventils (9) herstammt, durchlaufen wird,
**dadurch gekennzeichnet, dass** der Rezirkulationskreis (15) eine elektrische Vorrichtung (16) zur Erwärmung des Gasöls aufweist.

2. Vorrichtung nach Anspruch 1, wobei das Filterelement (5) in einem Behältnis (21) enthalten ist, das durch ein Filtergehäuse (20) begrenzt wird, wobei das Gehäuse ebenfalls das Thermostatventil (9) und den Rezirkulationskreis (15) mit seiner elektrischen Heizeinrichtung (16) aufweist.

3. Vorrichtung nach Anspruch 2, wobei das Filtergehäuse (20) ferner einen ersten Einlassanschluss (26), der mit dem Behälter (3) vor dem Filterelement (5) verbunden ist, einen ersten Auslassanschluss (28), der mit der Pumpe (4) stromabwärts von dem Filterelement verbunden ist, einen zweiten Einlassanschluss (10), der den Einlassweg des Thermostatventils bildet, und einen zweiten Auslassanschluss (12), der den ersten Auslassweg des Thermostatventils bildet, aufweist.

4. Gasölfilter für eine Zuführvorrichtung nach Anspruch 2, der ein Filtergehäuse (20) aufweist, das ein ein Filterelement (5) enthaltendes Behältnis (21) begrenzt, wobei das Filtergehäuse ebenfalls aufweist:
- einen ersten Einlassanschluss (26), der mit dem Behältnis (21) vor dem Filterelement in Verbindung steht,
- einen ersten Auslassanschluss (28), der mit dem Behältnis (21) stromabwärts vom Filterelement in Verbindung steht,
- ein Thermostatventil (9) mit drei Wegen mit einem Einlassweg (10) und einem ersten und zweiten Auslassweg (12, 14), wobei der Einlassweg (10) durch einen zweiten Einlassanschluss gebildet ist, wobei der erste Auslassweg (12) durch einen zweiten Auslassanschluss gebildet wird, wobei das Thermostatventil (9) dazu geeignet ist, einen Gasölstrom vom Einlassweg (10) zum ersten Auslassweg (12) mehrheitlich auszurichten, wenn eine Temperatur des Gasöls höher als eine vorbestimmte Temperatur ist, und den Gasölstrom zum zweiten Auslassweg (14) mehrheitlich auszurichten, wenn die Gasöltemperatur niedriger als die vorbestimmte Temperatur ist,
- und einen Rezirkulationskreis (15) der den zweiten Auslassweg (14) des Thermostatventils mit dem Behältnis (21) vor dem Filterelement (5) verbindet, wobei der Rezirkulationskreis eine elektrische Vorrichtung (16) zur Erwärmung des Gasöls aufweist.

5. Filter nach Anspruch 4, wobei der Rezirkulationskreis (15) zwischen einerseits einer Außenwand (30), die zum Filtergehäuse gehört, und andrerseits einer ersten angebrachten Platte (31), die sich im Behältnis (21) befindet, begrenzt wird, wobei die Außenwand und die erste angebrachte Platte von zwei Leitungen (27, 29) abgedichtet durchquert werden, die mit dem ersten Einlassanschluss (26) bzw. dem ersten Auslassanschluss (28) verbunden sind.

6. Filter nach Anspruch 5, wobei der Rezirkulationskreis (15) drei übereinander angeordneten Stufen aufweist, die durch eine zweite und dritte angebrachte Metallplatte (32, 33) voneinander getrennt sind, die sich zwischen der Außenwand (30) des Gehäuses und der ersten angebrachten Platte (31) befinden und die mit den zur elektrischen Heizvorrichtung (16) gehörenden Heizelementen (37) in Wärmeberührung stehen, wobei der Rezirkulationskreis (15) in einer solchen Weise ausgebildet ist, dass das Gasöl, das diesen Rezirkulationskreis durchläuft, parallel zur zweiten und dritten angebrachten Platte (32, 33) in jeder Stufe des Rezirkulationskreises verläuft.

7. Filter nach Anspruch 6, wobei die Heizelemente (37) zwischen die zweite und dritte angebrachte Platte (32, 33) die gegeneinander elastisch beansprucht sind, gedrückt sind.

8. Filter nach Anspruch 7, wobei die Heizelemente (37) mittels der zweiten und dritten angebrachten Platte elektrisch gespeist sind.

## Claims

1. Diesel oil supply device for a diesel engine, comprising:
- a diesel oil storage tank (1),
- a diesel oil injection device (2),
- a supply circuit (3) connecting the tank (1) to the injection device (2), this supply circuit comprising firstly a pump (4) feeding the injection device and secondly a filter element (5) arranged upstream of the pump,
- and a return circuit (7) designed to receive excess diesel oil downstream of the pump (4), this return circuit comprising a three-way thermostatic valve (9) having one inlet port (10) and first and second outlet ports (12, 14), the inlet port (10) being connected to receive the said excess diesel oil downstream of the pump, the first outlet port (12) being connected to the tank (1) and the second outlet port (14) connected to a recycle loop (15) linked to the supply circuit (3) upstream of the filter element (5), the thermostatic valve (9) being designed to direct the majority of the excess diesel oil towards the first outlet port (12) when the diesel oil temperature is above a predetermined temperature, and to direct the majority of the excess diesel oil towards the second outlet port (14) when the said diesel oil temperature is below the said predetermined temperature, the recycle loop (15) being traversed solely by excess diesel oil originating from the second outlet port (14) of the thermostatic valve (9),
**characterized in that** the recycle loop (15) comprises an electrical device (16) to heat the diesel oil.

2. Device according to Claim 1, in which the filter element (5) is contained in a vessel (21) bounded by a filter housing (20), the said housing also comprising the thermostatic valve (9) and the recycle loop (15) with its electrical heating element (16).

3. Device according to Claim 2, in which the filter housing (20) also comprises a first inlet connection (26) linked to the tank (3) upstream of the filter element (5), a first outlet connection (28) linked to the pump (4) downstream of the filter element, a second inlet connection (10) constituting the inlet route of the thermostatic valve, and a second outlet connection (12) constituting the first outlet route of the thermostatic valve.

4. Diesel oil filter for a supply device according to Claim 2, comprising a filter housing (20) that bounds a container (21) containing a filter element (5), this filter housing also comprising:
- a first inlet connection (26) communicating with the container (21) upstream of the filter element,
- a first outlet connection (28) communicating with the container (21) downstream of the filter element,
- a three-way thermostatic valve (9) having one inlet port (10) and first and second outlet ports (12, 14), the inlet port (10) consisting of a second inlet connection, the first outlet port (12) consisting of a second outlet connection, and the thermostatic valve (9) being designed to direct the majority of a diesel oil flow from the inlet port (10) towards the first outlet port (12) when the diesel oil temperature is above a predetermined temperature, and to direct the majority of the said diesel oil flow towards the second outlet port (14) when the said diesel oil temperature is below the said predetermined temperature,
- and a recycle loop (15) connecting the second outlet port (14) of the thermostatic valve to the vessel (21) upstream of the filter element (5), this recycle loop comprising an electrical diesel oil heating device (16).

5. Filter according to Claim 4, in which the recycle loop (15) is bounded between firstly an end-wall (30) belonging to the filter housing, and secondly a first additional plate (31) arranged in the container (21), the said end-wall and the said first additional plate being-traversed in a leak-tight manner by two pipes (27, 29) communicating respectively with the first inlet connection (26) and the first outlet connection (28).

6. Filter according to Claim 5, in which the recycle loop (15) comprises three superimposed stages separated from one another by second and third additional metallic plates (32, 33) arranged between the said end-wall (30) of the housing and the first additional plate (31) and which are in thermal contact with heating elements (37) belonging to the electrical heating device (16), the recycle loop (15) being configured in such a way that the diesel oil traversing this recycle loop passes in parallel to the second and third additional plates (32, 33) at each stage of the said recycle loop..

7. Filter according to Claim 6, in which the heating elements (37) are clamped between the second and third additional plates (32, 33) which are pulled elastically towards one another.

8. Filter according to Claim 7, in which the heating elements (37) are supplied with electricity via second and third additional plates.
